# EUROPÄISCHE PATENTSCHRIFT

(11) **EP 3 152 469 B1**
(45) Veröffentlichungstag und Bekanntmachung des Hinweises auf die Patenterteilung: **02.09.2020**
(21) Anmeldenummer: 15718235.3
(22) Anmeldetag: 27.04.2015
(51) Int. Cl.: F16H 61/24, G05G 5/06

(54) **VORRICHTUNG ZUM EINSTELLEN EINER BEWEGUNG EINES BEDIENELEMENTS FÜR EIN AUTOMATIKGETRIEBE EINES FAHRZEUGS, VERFAHREN ZUM HERSTELLEN DERSELBEN UND SCHALTVORRICHTUNG ZUM SCHALTEN EINES AUTOMATIKGETRIEBES EINES FAHRZEUGS**
DEVICE FOR ADJUSTING A MOVEMENT OF AN OPERATING ELEMENT FOR AN AUTOMATIC TRANSMISSION OF A VEHICLE, METHOD FOR PRODUCING SAME, AND SHIFTING DEVICE FOR SHIFTING AN AUTOMATIC TRANSMISSION OF A VEHICLE
DISPOSITIF DE RÉGLAGE DU MOUVEMENT D'UN ÉLÉMENT DE COMMANDE POUR BOÎTE DE VITESSES AUTOMATIQUE D'UN VÉHICULE, PROCÉDÉ DE PRODUCTION DUDIT DISPOSITIF ET DISPOSITIF DE COMMUTATION D'UNE BOÎTE DE VITESSES AUTOMATIQUE D'UN VÉHICULE

(30) Priorität: 06.06.2014 DE 102014210828
(43) Veröffentlichungstag der Anmeldung: 12.04.2017
(73) Patentinhaber: ZF Friedrichshafen AG, 88046 Friedrichshafen (DE)
(72) Erfinder: KÜHNE, Yanik, 49356 Diepholz (DE); VOELZ, Michael, 49356 Diepholz (DE); ROSENTRETER, Sascha, 32339 Espelkamp (DE)
(74) Vertreter: ZF Friedrichshafen AG
(86) Internationale Anmeldenummer: PCT/EP2015/059018
(87) Internationale Veröffentlichungsnummer: WO 2015/185280

(56) Entgegenhaltungen:
- DE-A1- 3 622 617
- DE-A1-102012 206 992

## Beschreibung

Die vorliegende Erfindung bezieht sich auf eine Vorrichtung zum Einstellen einer Bewegung eines Bedienelements für ein Automatikgetriebe eines Fahrzeugs, auf eine Schaltvorrichtung zum Schalten eines Automatikgetriebes eines Fahrzeugs sowie auf ein Verfahren zum Herstellen einer Vorrichtung zum Einstellen einer Bewegung eines Bedienelements für ein Automatikgetriebe eines Fahrzeugs.

Eine Rastiervorrichtung im Fahrzeugbereich bzw. Automobilbereich kann im Zusammenhang mit einem automatischen Schaltgetriebe für eine Führung und haptische Positionsrückkopplung eines Schalthebels bzw. Wählhebels eingesetzt werden. Die DE 10 2012 206 992 A1 offenbart eine Rastiervorrichtung.

Vor diesem Hintergrund schafft die vorliegende Erfindung eine verbesserte Vorrichtung zum Einstellen einer Bewegung eines Bedienelements für ein Automatikgetriebe eines Fahrzeugs, eine verbesserte Schaltvorrichtung zum Schalten eines Automatikgetriebes eines Fahrzeugs sowie ein verbessertes Verfahren zum Herstellen einer Vorrichtung zum Einstellen einer Bewegung eines Bedienelements für ein Automatikgetriebe eines Fahrzeugs gemäß den Hauptansprüchen. Vorteilhafte Ausgestaltungen ergeben sich aus den Unteransprüchen und der nachfolgenden Beschreibung.

Gemäß Ausführungsformen der vorliegenden Erfindung kann insbesondere eine akustikentkoppelte Rastierung bzw. körperschallentkoppelte Rastiervorrichtung für ein Bedienelement eines Fahrzeuggetriebes bereitgestellt werden. Hierzu kann die Rastiervorrichtung aus zwei Materialien mit unterschiedlicher Elastizität ausformbar oder ausgeformt sein, um an zumindest einer Kontaktoberfläche der Rastiervorrichtung ein hochelastisches Material aufzuweisen.

Vorteilhafterweise können gemäß Ausführungsformen der vorliegenden Erfindung beispielsweise Geräuschemissionen einer Schaltung des Getriebes durch verbesserte Körperschallentkopplung aufgrund von Weichmaterial-Kontaktoberflächen reduziert werden. Somit können sowohl ein Bedienkomfort einer Getriebeschaltung erhöht als auch Störgeräusche in einem Fahrzeuginnenraum vermindert werden. Ferner kann eine Montage bzw. Montagetätigkeit für akustische Entkopplungselemente entfallen. Zudem kann eine Anzahl an erforderlichen Bauteilen gesenkt werden. Auch ergeben sich beispielsweise kurze Toleranzketten.

Eine Vorrichtung zum Einstellen einer Bewegung eines Bedienelements für ein Automatikgetriebe eines Fahrzeugs weist eine Rastierkontur zum Definieren zumindest einer Schaltstellung des Bedienelements entlang eines Bewegungswegs des Bedienelements und eine Kontaktoberfläche auf, wobei die Rastierkontur zumindest teilweise aus einem Hartmaterial mit einer ersten Elastizität und die Kontaktoberfläche aus einem Weichmaterial mit einer zweiten Elastizität ausgeformt ist, und wobei die zweite Elastizität des Weichmaterials größer als die erste Elastizität des Hartmaterials ist.

Die Vorrichtung kann zum Einstellen einer Bewegung eines Bedienelements einer Maschine, beispielsweise einem Fahrzeug, eingesetzt werden. Bei dem Fahrzeug kann es sich um Kraftfahrzeug handeln, insbesondere ein straßengebundenes Fahrzeug, wie einen Personenkraftwagen oder einen Lastkraftwagen. Alternativ kann es sich bei dem Fahrzeug beispielsweise um ein Schienenfahrzeug oder ein Luftfahrzeug handeln. Bei der Vorrichtung kann es sich um ein Gerät oder einen Teil eines Geräts des Fahrzeugs handeln. Die Vorrichtung kann als eine Rastiervorrichtung bezeichnet werden. Die Vorrichtung kann aus dem Hartmaterial und dem Weichmaterial einstückig ausgeformt sein. Die Rastierkontur kann einen Teilabschnitt der Vorrichtung repräsentieren. Die Rastierkontur kann anordenbar, ausgeformt und ausgebildet sein, um das Bedienelement zu führen, und zusätzlich oder alternativ einen Widerstand bzw. eine sensorische, insbesondere haptische, Rückkopplung bezüglich einer Bewegung oder Schaltstellung des Bedienelements bei Schaltvorgängen zu ermöglichen. Bei dem Bedienelement kann es sich um einen Schalthebel des Automatikgetriebes handeln, der beispielsweise von einem Fahrer des Fahrzeugs mit der Hand bedient werden kann, um unterschiedliche Fahrstufen bzw. Gänge des Automatikgetriebes einzustellen. Beispielsweise kann die Bewegung des Bedienelements zwischen Schaltstellungen bzw. Positionen P für Parken, N für Leerlauf, R für Rückwärtsfahren und D für Fahren sowie von D aus in eine manuelle Gasse bzw. Schaltgasse erfolgen. Auch kann die Bewegung des Bedienelements zwischen einer Ruhestellung und zumindest einer Auslenkungsstellung erfolgen. Die Kontaktoberfläche kann eine außen liegende Oberfläche der Vorrichtung sein. Die Kontaktoberfläche kann einstückig sein oder zumindest zwei voneinander beabstandet angeordnete Teilabschnitte umfassen.

Gemäß der vorliegenden Erfindung umfasst die Kontaktoberfläche eine Bedienelement-Kontaktoberfläche in mindestens einem einer Schaltstellung des Bedienelements zugeordneten Teilabschnitt der Rastierkontur. Hierbei kann die Rastierkontur teilweise aus dem Hartmaterial und in dem mindestens einen Teilabschnitt aus dem Weichmaterial ausgeformt sein. Der mindestens eine Teilabschnitt kann einer Schaltstellung des Bedienelements zugeordnet sein, bei der es sich beispielsweise um eine Ruhestellung oder Position D handeln kann. Eine solche Ausführungsform bietet den Vorteil, dass eine selektive Positionsdämpfung mit akustischer Entkopplung zwischen Rastierkontur und Bedienelement ermöglicht wird.

Auch kann die Vorrichtung einen aus dem Weichmaterial ausgeformten Weichmaterialabschnitt aufweisen und die zumindest teilweise aus dem Hartmaterial ausgeformte Rastierkontur den Weichmaterialabschnitt überspannend ausgeformt sein. Dabei kann der Weichmaterialabschnitt ausgebildet sein, um als eine Dämmmatte bzw. Dämmunterlage für die Rastierkontur zu fungieren. Somit ist eine Außenoberfläche der Vorrichtung im Bereich der Rastierkontur zumindest teilweise aus dem Hartmaterial ausgeformt. Eine solche Ausführungsform bietet den Vorteil, dass eine verbesserte Dämpfung bzw. gedämpfte Lagerung der Rastierkontur ermöglicht wird. Somit kann eine verbesserte akustische Dämpfung bei der Bewegung des Bedienelements erreicht werden.

Ferner kann die Vorrichtung mindestens einen Befestigungsabschnitt zum Befestigen der Vorrichtung an einer Trägereinrichtung mittels eines Befestigungselements aufweisen. Hierbei kann die Kontaktoberfläche ferner eine Befestigungskontaktoberfläche des mindestens einen Befestigungsabschnitts umfassen. Eine solche Befestigungskontaktoberfläche kann ausgebildet sein, um in einem an der Trägereinrichtung befestigten Zustand der Vorrichtung in mechanischem Kontakt mit der Trägereinrichtung und zusätzlich oder alternativ einem Befestigungselement zu stehen. Eine solche Ausführungsform bietet den Vorteil, dass eine akustische Entkopplung zwischen der Trägereinrichtung bzw. einem Gehäuse und der Vorrichtung sowie der Rastierkontur ermöglicht wird, so dass eine Körperschallentkopplung weiter verbessert werden kann.

Zudem kann die Vorrichtung mindestens einen Anschlagabschnitt zum mechanischen Begrenzen einer Bewegung des Bedienelements entlang dem Bewegungsweg aufweisen. Dabei kann die Kontaktoberfläche ferner eine Anschlagkontaktoberfläche des mindestens einen Anschlagabschnitts umfassen. Der mindestens eine Anschlagabschnitt kann zumindest teilweise aus dem Weichmaterial ausgeformt sein. Mittels des mindestens einen Anschlagabschnitts kann somit mindestens ein Endposition bei einer Bewegung des Bedienelements definiert sein. Die Definition der zumindest einen Endposition kann zusätzlich mittels einer geometrischen Form der Rastierkontur erfolgen. Eine solche Ausführungsform bietet den Vorteil, dass eine akustikentkoppelte Rastierung mit integrierten Anschlagsdämpfern für das Bedienelement bereitgestellt werden kann.

Insbesondere kann ein das Weichmaterial umfassender Bereich der Vorrichtung zusammenhängend und zusätzlich oder alternativ einstückig ausgeformt sein. Somit kann ein zusammenhängendes bzw. einstückiges Weichmaterialvolumen die Bedienelement-Kontaktoberfläche, den Weichmaterialabschnitt, die Befestigungskontaktoberfläche und zusätzlich oder alternativ die Anschlagkontaktoberfläche umfassen. Eine solche Ausführungsform bietet den Vorteil, dass eine Montage bzw. Montagetätigkeit für andernfalls übliche Entkopplungselemente entfallen kann und eine Anzahl von erforderlichen Bauteilen für eine Schaltvorrichtung reduziert werden kann.

Eine Schaltvorrichtung zum Schalten eines Automatikgetriebes eines Fahrzeugs weist ein Bedienelement mit einem Rastierelement auf, wobei die Schaltvorrichtung eine Ausführungsform der vorstehend genannten Vorrichtung zum Einstellen einer Bewegung des Bedienelements aufweist, wobei das Rastierelement des Bedienelements bei der Bewegung des Bedienelements entlang der Rastierkontur der Vorrichtung bewegbar angeordnet ist.

In Verbindung mit der Schaltvorrichtung kann eine Ausführungsform der vorstehend genannten Vorrichtung zum Einstellen vorteilhaft verwendet bzw. eingesetzt werden, um eine Bewegung des Bedienelements einzustellen. Dabei kann eine akustische Entkopplung zwischen Rastierkontur und Rastierelement bzw. eine akustische Entkopplung zwischen Rastierkontur und Bedienelement erreicht werden. Bei dem Rastierelement kann es sich um einen Rastierstift bzw. Rastierpin oder dergleichen handeln. Das Rastierelement des Bedienelements kann in einem zusammengefügten Zustand der Schaltvorrichtung in Anlage gegen die Rastierkontur der Vorrichtung angeordnet sein. Das Rastierelement kann durch elastische Mittel in eine Richtung zu der Rastierkontur der Vorrichtung hin vorgespannt sein. Die Schaltvorrichtung kann ferner eine Trägereinrichtung aufweisen, an der Vorrichtung zum Einstellen befestigbar oder befestigt sein kann.

Ein Verfahren zum Herstellen einer Vorrichtung zum Einstellen einer Bewegung des Bedienelements für ein Automatikgetriebe eines Fahrzeugs weist folgende Schritte auf:
Ausformen einer Rastierkontur zum Definieren zumindest einer Schaltstellung des Bedienelements entlang einem Bewegungsweg des Bedienelements zumindest teilweise aus einem Hartmaterial mit einer ersten Elastizität; und
Ausformen einer Kontaktoberfläche der Vorrichtung aus einem Weichmaterial mit einer zweiten Elastizität, die größer als die erste Elastizität ist.

Durch Ausführen des Verfahrens kann eine Ausführungsform der vorstehend genannten Vorrichtung zum Einstellen vorteilhaft hergestellt werden.

Gemäß der vorliegenden Erfindung ist im Schritt des Ausformens der Kontaktoberfläche eine Bedienelement-Kontaktoberfläche in mindestens einem einer Schaltstellung des Bedienelements zugeordneten Teilabschnitt der Rastierkontur, eine Befestigungskontaktoberfläche mindestens eines Befestigungsabschnitts zum Befestigen der Vorrichtung an einer Trägereinrichtung mittels eines Befestigungselements und zusätzlich oder alternativ eine Anschlagkontaktoberfläche mindestens eines Anschlagabschnitts zum mechanischen Begrenzen einer Bewegung des Bedienelements entlang dem Bewegungsweg aus dem Weichmaterial ausgeformt. Ferner kann in den Schritten des Ausformens die Vorrichtung so ausgeformt werden, dass die zumindest teilweise aus dem Hartmaterial ausgeformte Rastierkontur einen Weichmaterialabschnitt überspannt. Eine solche Ausführungsform bietet den Vorteil, dass eine Rastiervorrichtung mit verbesserter Körperschallentkopplung sowie gegebenenfalls mit selektiver Positionsdämpfung und/oder Anschlagsdämpfung bereitgestellt werden kann.

Auch können die Schritte des Ausformens durch Ausführen eines Zweikomponenten-Spritzgussprozesses ausgeführt werden. Somit kann die Vorrichtung in den Schritten des Ausformens durch Spritzgießen aus dem Hartmaterial sowie dem Weichmaterial ausgeformt werden. Dabei kann das Weichmaterial der Vorrichtung zusammenhängend und zusätzlich oder alternativ einstückig ausgeformt werden. Eine solche Ausführungsform bietet den Vorteil, dass die Vorrichtung durch Zweikomponentenspritzguss besonders kostengünstig herstellbar ist.

Die Erfindung wird anhand der beigefügten Zeichnungen beispielhaft näher erläutert. Es zeigen:
- Fig. 1: eine perspektivische Ansicht einer Vorrichtung zum Einstellen gemäß einem Ausführungsbeispiel der vorliegenden Erfindung;
- Fig. 2: eine Seitenansicht der Vorrichtung zum Einstellen aus Fig. 1;
- Fig. 3: eine Draufsicht der Vorrichtung zum Einstellen aus Fig. 1 bzw. Fig. 2;
- Fig. 4: eine Schnittansicht einer Schaltvorrichtung gemäß einem Ausführungsbeispiel der vorliegenden Erfindung;
- Fig. 5: eine Schnittansicht der Schaltvorrichtung aus Fig. 4 in einem anderen Schaltzustand;
- Fig. 6: ein Ablaufdiagramm eines Herstellungsverfahren gemäß einem Ausführungsbeispiel der vorliegenden Erfindung;
- Fig. 7: eine schematische Darstellung eines Fahrzeugs mit einer Schaltvorrichtung gemäß einem Ausführungsbeispiel der vorliegenden Erfindung; und
- Figuren 8A bis 8F: Darstellungen einer Vorrichtung zum Einstellen gemäß einem weiteren Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

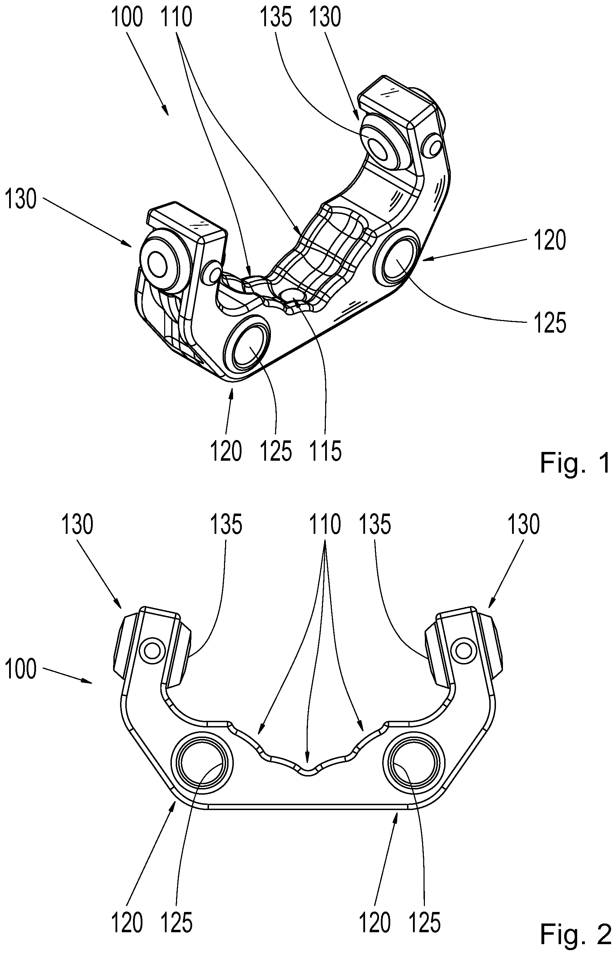

Fig. 1 zeigt eine perspektivische Ansicht einer Vorrichtung 100 zum Einstellen einer Bewegung eines Bedienelements für ein Automatikgetriebe eines Fahrzeugs gemäß einem Ausführungsbeispiel der vorliegenden Erfindung. Gezeigt sind in Fig. 1 von der Vorrichtung 100 bzw. Rastiervorrichtung hierbei eine Rastierkontur 110, eine Bedienelement-Kontaktoberfläche 115 und eine lediglich beispielhafte Anzahl von je zwei Befestigungsabschnitten 120, Befestigungskontaktoberflächen 125, Anschlagabschnitten 130 sowie Anschlagkontaktoberflächen 135.

Die Vorrichtung 100 ist als ein einstückiger Körper aus einem Hartmaterial und einem Weichmaterial ausgeformt. Dabei weist das Hartmaterial eine erste Elastizität und das Weichmaterial eine zweite Elastizität auf. Die zweite Elastizität ist größer als die erste Elastizität. Die Vorrichtung 100 ist bis auf die Bedienelement-Kontaktoberfläche 115, die Befestigungskontaktoberflächen 125 und die Anschlagkontaktoberflächen 135 aus dem Hartmaterial ausgeformt.

Hierbei ist die Vorrichtung 100 länglich und mit einem trogförmigen bzw. U-ähnlichen, seitlich offenen Profil ausgeformt. In einem Bodenbereich des trogförmigen Profils der Vorrichtung 100 sind die Rastierkontur 110, die Bedienelement-Kontaktoberfläche 115, die Befestigungsabschnitte 120 und die Befestigungskontaktoberflächen 125 angeordnet. In Seitenwandbereichen des trogförmigen Profils der Vorrichtung 100 sind die Anschlagabschnitte 130 und die Anschlagkontaktoberflächen 135 angeordnet. Gemäß dem in Fig. 1 dargestellten Ausführungsbeispiel der vorliegenden Erfindung sind die Seitenwandbereiche des trogförmigen Profils bezüglich des Bodenbereichs des trogförmigen Profils überhängend ausgeformt.

Die Rastierkontur 110 ist in dem Bodenbereich des trogförmigen Profils der Vorrichtung 100 angeordnet bzw. ausgeformt. Dabei ist die Rastierkontur 110 als eine längliche Mulde mit abgerundet stufenförmigem Grund in dem Bodenbereich ausgeformt. Insbesondere weist die Rastierkontur 110 ein mehrfach geknicktes, grob V-förmiges Längsprofil auf. Gemäß dem in Fig. 1 dargestellten Ausführungsbeispiel der vorliegenden Erfindung ist die Rastierkontur 110 bis auf die Bedienelement-Kontaktoberfläche 115 aus dem Hartmaterial mit der ersten Elastizität ausgeformt. Die Rastierkontur 110 ist ausgebildet, um zumindest eine Schaltstellung des Bedienelements entlang einem Bewegungsweg des Bedienelements zu definieren. Auch ist die Rastierkontur 110 ausgebildet, um bei der Bewegung des Bedienelements entlang dem Bewegungsweg einen Teilabschnitt des Bedienelements entlang der Rastierkontur 110 zu führen. Hierbei ist der Teilabschnitt des Bedienelements entlang der Rastierkontur 110 bewegbar.

Die Rastierkontur 110 weist die Bedienelement-Kontaktoberfläche 115 auf. Die Bedienelement-Kontaktoberfläche 115 ist aus dem Weichmaterial mit der zweiten Elastizität ausgeformt. Dabei ist die Bedienelement-Kontaktoberfläche 115 im Wesentlichen mittig bezüglich einer Längserstreckungsabmessung der Rastierkontur 110 angeordnet. Genau gesagt ist die Bedienelement-Kontaktoberfläche 115 in einem einer Schaltstellung des Bedienelements zugeordneten Teilabschnitt der Rastierkontur 110 angeordnet. Bei der Schaltstellung handelt es sich beispielsweise um eine Ruhestellung oder Mittenstellung bzw. Normalstellung des Bedienelements. Die Bedienelement-Kontaktoberfläche 115 ist somit ausgebildet, um eine selektive Positionsdämpfung des Bedienelements zu ermöglichen, hier an einer Mittenposition, wobei weitere Positionen möglich sind. Optional kann die Rastierkontur 110 auch zumindest eine weitere Bedienelement-Kontaktoberfläche 115 in zumindest einem weiteren Teilabschnitt aufweisen, der mindestens einer weiteren Schaltstellung zugeordnet ist.

Ein erster der Befestigungsabschnitte 120 ist in einem ersten Endbereich der Rastierkontur 110 in der Vorrichtung 100 ausgeformt. Ein zweiter der Befestigungsabschnitte 120 ist in einem von dem ersten Endbereich abgewandten, zweiten Endbereich der Rastierkontur 110 in der Vorrichtung ausgeformt. Somit ist die Rastierkontur 110 zwischen den Befestigungsabschnitten 120 angeordnet. Die Befestigungsabschnitte 120 sind als Durchgangsöffnungen durch die Vorrichtung 100 ausgeformt. Längserstreckungsachsen der Befestigungsabschnitte 120 erstrecken sich hierbei quer zu einer Längserstreckungsachse der Rastierkontur 110. Die Befestigungsabschnitte 120 sind ausgebildet zum Befestigen der Vorrichtung 100 an einer Trägereinrichtung mittels Befestigungselementen.

Die Befestigungskontaktoberflächen 125 sind sich in den Durchgangsöffnungen der Befestigungsabschnitte 120 erstreckend angeordnet. Dabei sind die Befestigungskontaktoberflächen 125 aus dem Weichmaterial ausgeformt. Eine erste der Befestigungskontaktoberflächen 125 ist in dem ersten der Befestigungsabschnitte 120 angeordnet und eine zweite der Befestigungskontaktoberflächen 125 ist in dem zweiten der Befestigungsabschnitte 120 angeordnet. Die Befestigungskontaktoberflächen 125 sind ausgebildet, um in einem an der Trägereinrichtung befestigten Zustand der Vorrichtung 100 in physischem bzw. mechanischem Kontakt mit der Trägereinrichtung und/oder den Befestigungselementen zu stehen. Anders ausgedrückt repräsentieren die Befestigungsabschnitte 120 somit Aufnahmeabschnitte bzw. Aufnahmepunkte in der Trägereinrichtung bzw. einem Gehäuse, wobei eine Körperschallentkopplung der Vorrichtung 100 durch das Weichematerial bzw. eine Weichkomponente der Befestigungskontaktoberflächen 125 realisierbar ist.

Die Anschlagabschnitte 130 sind in den Seitenwandbereichen des trogförmigen Profils bzw. in Endbereichen der Vorrichtung 100 angeordnet bzw. ausgeformt. Ein erster der Anschlagabschnitte 130 ist im Bereich eines ersten Endes der Vorrichtung 100 angeordnet und ein zweiter der Anschlagabschnitte 130 ist im Bereich eines dem ersten Ende gegenüberliegenden, zweiten Endes der Vorrichtung 100 angeordnet. Somit sind in der Vorrichtung 100 die Befestigungsabschnitte 120 und die Rastierkontur 110 zwischen den Anschlagabschnitten 130 angeordnet. Die Anschlagabschnitte 130 sind ausgebildet, um eine Bewegung des Bedienelements entlang dem Bewegungsweg mechanisch zu begrenzen. Anders ausgedrückt fungieren die Anschlagabschnitte 130 als Anschlagsdämpfer für das Bedienelement bzw. einen Schalthebel.

Die Anschlagkontaktoberflächen 135 sind Teil der Anschlagabschnitte 130. Hierbei sind die Anschlagkontaktoberflächen 135 der Rastierkontur 110 zugewandt angeordnet. Anders ausgedrückt sind die Anschlagkontaktoberflächen 135 einer Innenseite eines durch die Vorrichtung 110 gebildeten Troges zugewandt. Insbesondere sind die Anschlagkontaktoberflächen 135 somit auch im Wesentlichen einander zugewandt angeordnet. Dabei sind die Anschlagkontaktoberflächen 135 aus dem Weichmaterial ausgeformt. Der erste der Anschlagabschnitte 130 weist eine erste der Anschlagkontaktoberflächen 135 auf und der zweite der Anschlagabschnitte 130 weist eine zweite der Anschlagkontaktoberflächen 135 auf. Die Anschlagkontaktoberflächen 135 sind ausgebildet, um in Anschlagstellungen des Bedienelements, die Enden des Bewegungswegs desselben zugeordnet sind, von dem Bedienelement mechanisch kontaktierbar zu sein.

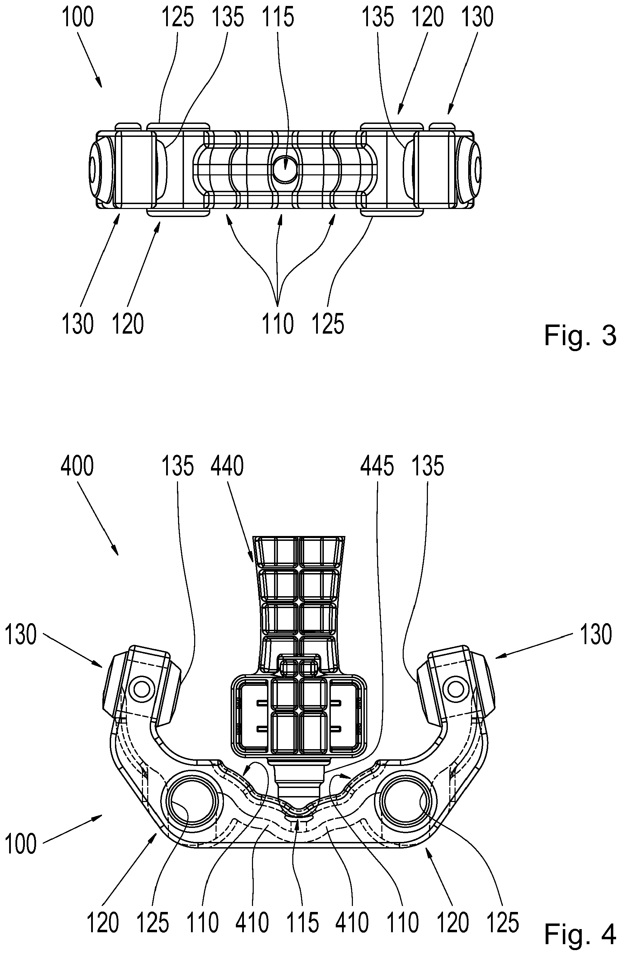

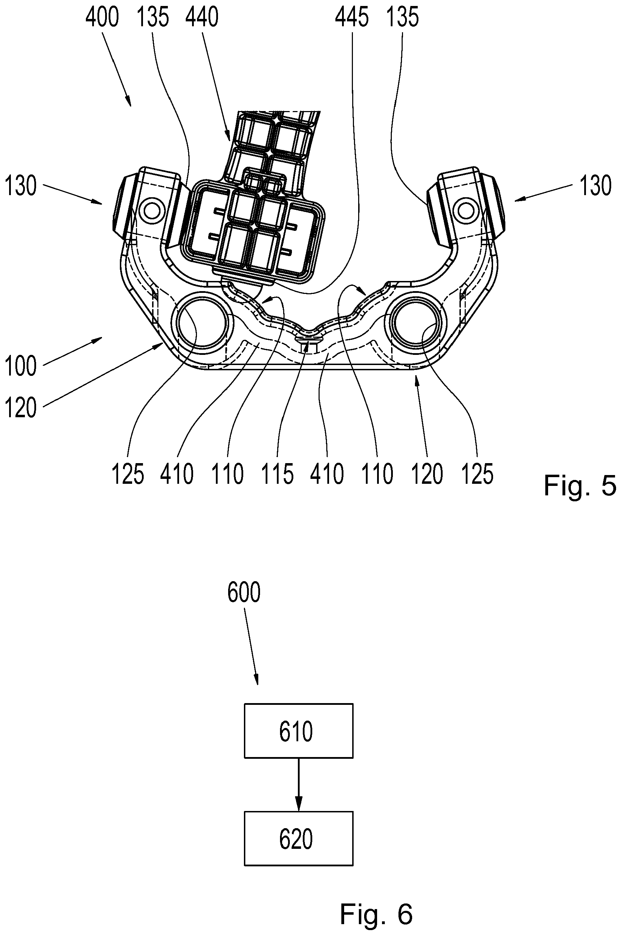

Auch wenn es in Fig. 1 nicht explizit gezeigt ist, aber unter Bezugnahme auf Fig. 4 bzw. Fig. 5 erkennbar ist, sei angemerkt, dass das Weichmaterial der Vorrichtung 100 gemäß einem Ausführungsbeispiel zusammenhängend und/oder einstückig ausgeformt ist und die zumindest teilweise aus dem Hartmaterial ausgeformte Rastierkontur 110 einen Weichmaterialabschnitt überspannt.

Gemäß einem Ausführungsbeispiel kann ein das Weichmaterial umfassender Bereich der Vorrichtung 100 nur die Bedienelement-Kontaktoberfläche 115, nur zumindest eine der Befestigungskontaktoberflächen 125, nur zumindest eine der Anschlagkontaktoberflächen 135 oder nur den Weichmaterialabschnitt, oder auch eine beliebige Kombination einiger oder aller dieser Merkmale 115, 125, 135 aufweisen.

Fig. 2 zeigt eine Seitenansicht der Vorrichtung 100 aus Fig. 1. Hierbei ist die Bedienelement-Kontaktoberfläche aufgrund der Muldenform der Rastierkontur 110 von einer Seitenwand derselben in der Darstellung verdeckt. In Fig. 2 sind das mehrfach geknickte, grob V-förmige Längsprofil der Rastierkontur 110 sowie die Trogform der Vorrichtung 100 erkennbar.

Fig. 3 zeigt eine Draufsicht der Vorrichtung 100 aus Fig. 1 bzw. Fig. 2. Dabei sind die Rastierkontur 110 mit der mittig in derselben angeordneten Bedienelement-Kontaktoberfläche 115 erkennbar.

Fig. 4 zeigt eine Schnittansicht einer Schaltvorrichtung zum Schalten eines Automatikgetriebes eines Fahrzeugs gemäß einem Ausführungsbeispiel der vorliegenden Erfindung. Die Schaltvorrichtung weist die Vorrichtung zum Einstellen einer Bewegung eines Bedienelements aus einer der Figuren 1 bis 3 auf. Gezeigt sind in Fig. 4 somit die Vorrichtung 100 bzw. Rastiervorrichtung, die Rastierkontur 110, die Bedienelement-Kontaktoberfläche 115, die Befestigungsabschnitte 120, die Befestigungskontaktoberflächen 125, die Anschlagabschnitte 130, die Anschlagkontaktoberflächen 135, die Schaltvorrichtung 400, ein Weichmaterialabschnitt 410, ein Bedienelement 440 bzw. ein Schalthebel und ein Rastierelement 445. Die Schaltvorrichtung 400 weist die Vorrichtung 100 zum Einstellen einer Bewegung des Bedienelements 440 sowie das Bedienelement 440 mit dem Rastierelement 445 auf.

Auch wenn es in Fig. 4 nicht explizit gezeigt ist, so ist zu erkennen, dass das Bedienelement 440 um eine Schwenkachse bezüglich der Vorrichtung 100 schwenkbar angeordnet ist. Das Bedienelement 440 ist entlang einem Bewegungsweg schwenkbar bzw. bewegbar, wobei unterschiedliche Schaltzustände des Automatikgetriebes in Abhängigkeit von einer Schaltstellung des Bedienelements 440 einstellbar sind. Das Bedienelement 440 weist das Rastierelement 445 auf.

Das Rastierelement 445 ist an einem der Vorrichtung 100 zugewandten Ende des Bedienelements 440 federgelagert angebracht. Das Rastierelement 445 ist angeordnet und ausgebildet, um in die Rastierkontur 110 der Vorrichtung 100 hinein vorgespannt zu sein. Das Rastierelement 445 des Bedienelements 440 ist in der Darstellung von Fig. 4 in Anlage gegen die Bedienelement-Kontaktoberfläche 115 dargestellt. Somit ist das Bedienelement 440 in einem der Bedienelement-Kontaktoberfläche 115 zugeordneten Schaltzustand angeordnet. Der Schaltzustand entspricht beispielsweise einem Ruhezustand bzw. einer Mittenposition des Bedienelements 440. Bei der Bewegung des Bedienelements 440 zur Durchführung eines Schaltvorgangs ist das Rastierelement 445 entlang der Rastierkontur 110 der Vorrichtung 100 bewegbar.

In Fig. 4 ist ferner erkennbar, dass die zumindest teilweise aus dem Hartmaterial bzw. einer Hartkomponente ausgeformte Rastierkontur 110 den Weichmaterialabschnitt 410 überspannt, der in der Vorrichtung 100 innenliegend angeordnet ist. Auch ist in Fig. 4 erkennbar, dass das Weichmaterial bzw. eine Weichkomponente der Vorrichtung 100 zusammenhängend und/oder einstückig ausgeformt ist. Das Weichmaterial der Vorrichtung 100 umfasst somit die Bedienelement-Kontaktoberfläche 115, die Befestigungskontaktoberflächen 125, die Anschlagkontaktoberflächen 135 und den Weichmaterialabschnitt 410.

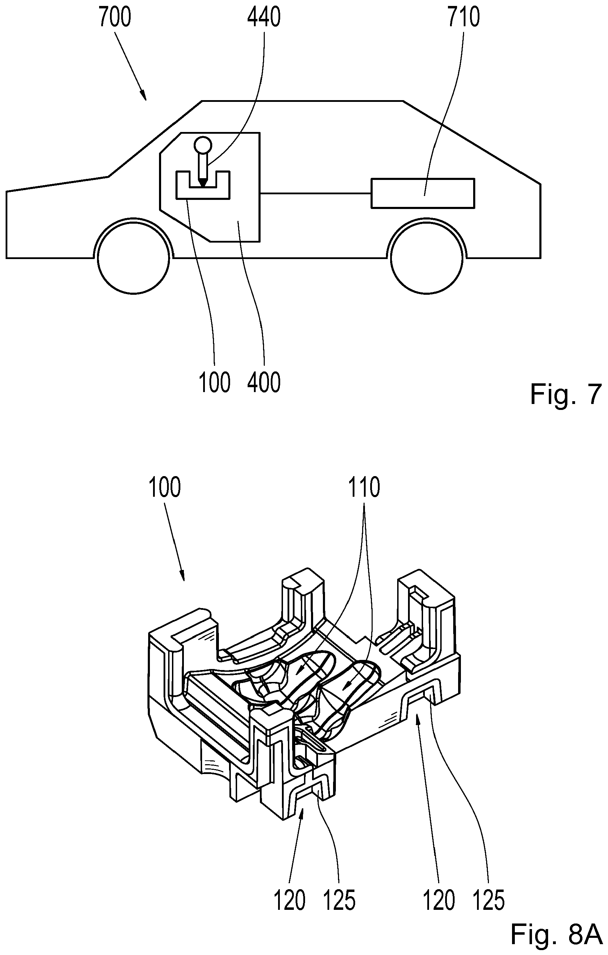

Gemäß einem Ausführungsbeispiel kann die Schaltvorrichtung 400 auch die Vorrichtung aus den Figuren 8A bis 8F als die Vorrichtung 100 aufweisen, auch wenn die Schaltvorrichtung 400 in Fig. 4 mit der Vorrichtung aus einer der Figuren 1 bis 3 gezeigt ist.

Fig. 5 zeigt eine Schnittansicht der Schaltvorrichtung 400 aus Fig. 4 in einem anderen Schaltzustand. Der Schaltzustand entspricht beispielsweise einem Auslenkungszustand des Bedienelements 440. Die Darstellung und die Schaltvorrichtung 400 in Fig. 5 entsprechen hierbei der Darstellung bzw. der Schaltvorrichtung aus Fig. 4 mit der Ausnahme, dass das Bedienelement 440 in Anlage gegen die in Fig. 5 links eingezeichnete der Anschlagkontaktoberflächen 135 angeordnet ist. Das Rastierelement 445 des Bedienelements 440 ist in der Darstellung von Fig. 5 in Anlage gegen einen in Fig. 5 links eingezeichneten Endabschnitt der Rastierkontur 110 der Vorrichtung 100 dargestellt.

Fig. 6 zeigt ein Ablaufdiagramm eines Verfahrens 600 zum Herstellen einer Vorrichtung zum Einstellen einer Bewegung des Bedienelements für ein Automatikgetriebe eines Fahrzeugs gemäß einem Ausführungsbeispiel der vorliegenden Erfindung. Durch Ausführen des Verfahrens 600 kann eine Vorrichtung zum Einstellen einer Bewegung des Bedienelements für ein Automatikgetriebe eines Fahrzeugs wie die Vorrichtung aus einer der Figuren 1 bis 5 bzw. 8A bis 8F hergestellt werden.

Das Verfahren 600 weist einen Schritt 610 des Ausformens einer Rastierkontur zum Definieren zumindest einer Schaltstellung des Bedienelements entlang einem Bewegungsweg des Bedienelements zumindest teilweise aus einem Hartmaterial mit einer ersten Elastizität auf. Auch weist das Verfahren 600 einen Schritt 620 des Ausformens einer Kontaktoberfläche der Vorrichtung aus einem Weichmaterial mit einer zweiten Elastizität auf, die größer als die erste Elastizität ist. Die Schritte 610 und 620 des Ausformens sind hierbei sequenziell, zumindest teilweise synchron und/oder wiederholt ausführbar.

Gemäß einem Ausführungsbeispiel wird die Vorrichtung im Schritt 620 des Ausformens der Kontaktoberfläche eine Bedienelement-Kontaktoberfläche in mindestens einem einer Schaltstellung des Bedienelements zugeordneten Teilabschnitt der Rastierkontur, eine Befestigungskontaktoberfläche mindestens eines Befestigungsabschnitts zum Befestigen der Vorrichtung an einer Trägereinrichtung mittels eines Befestigungselements und zusätzlich oder alternativ eine Anschlagkontaktoberfläche mindestens eines Anschlagabschnitts zum mechanischen Begrenzen einer Bewegung des Bedienelements entlang dem Bewegungsweg aus dem Weichmaterial ausgeformt. Gemäß einem Ausführungsbeispiel werden die Schritte 610 und 620 des Ausformens durch Ausführen eines Zweikomponenten-Spritzgussprozesses ausgeführt.

Fig. 7 zeigt eine schematische Darstellung eines Fahrzeugs 700 mit einer Schaltvorrichtung 400 zum Schalten eines Automatikgetriebes 710 des Fahrzeugs 700 gemäß einem Ausführungsbeispiel der vorliegenden Erfindung. Die Schaltvorrichtung 400 weist gemäß diesem Ausführungsbeispiel die anhand einer der Figuren 1 bis 3 bzw. den Figuren 8A bis 8F beschriebene Vorrichtung 100 zum Einstellen einer Bewegung eines Bedienelements 440 der Schaltvorrichtung 400 auf. Bei der Schaltvorrichtung 400 kann es sich um die Schaltvorrichtung aus Fig. 4 bzw. Fig. 5 handeln.

Das Fahrzeug 700 weist das Automatikgetriebe 710 und die Schaltvorrichtung 400 auf. Dabei ist die Schaltvorrichtung 400 zum Schalten des Automatikgetriebes 710 des Fahrzeugs 700 ausgebildet. Das Automatikgetriebe 710 ist mit der Schaltvorrichtung 400 signalübertragungsfähig verbunden. Die Schaltvorrichtung 400 weist die Vorrichtung 100 sowie das Bedienelement 440 auf.

Die Figuren 8A bis 8F zeigen Darstellungen einer Vorrichtung 100 zum Einstellen einer Bewegung eines Bedienelements für ein Automatikgetriebe eines Fahrzeugs gemäß einem weiteren Ausführungsbeispiel der vorliegenden Erfindung. Die in den Figuren 8A bis 8F gezeigte Vorrichtung 100 ähnelt hierbei der Vorrichtung aus einer der Figuren 1 bis 5, wobei die Vorrichtung 100 in den Figuren 8A bis 8F, anders als die Vorrichtung aus einer der Figuren 1 bis 5, eine Rastierkontur 110 mit zwei länglichen Mulden sowie eine Mehrzahl von Befestigungsabschnitten 120 in Gestalt von vertieften Bereichen mit Befestigungskontaktoberflächen 125 aufweist. Auch ist die Vorrichtung 100 in den Figuren 8A bis 8F ohne Bedienelement-Kontaktoberfläche, Anschlagabschnitte und Anschlagkontaktoberflächen dargestellt.

Somit sind gemäß dem in den Figuren 8A bis 8F gezeigten Ausführungsbeispiel der vorliegenden Erfindung von der Vorrichtung 100 die Rastierkontur 110 mit den zwei länglichen Mulden, die Befestigungsabschnitte 120 und die Befestigungskontaktoberflächen 125 dargestellt. Die zwei länglichen Mulden der Rastierkontur 110 sind innerhalb von Fertigungstoleranzen parallel zueinander ausgeformt. Zwischen den zwei länglichen Mulden ist eine gemeinsame Begrenzungswand ausgeformt. Ferner weist die Rastierkontur 110 einen Übergangsabschnitt auf, in dem die gemeinsame Begrenzungswand durchbrochen ist. Der Übergangsabschnitt ist ausgebildet, um eine Übergangsbewegung des Bedienelements von einer Mulde in die andere Mulde zu ermöglichen.

Die zwei länglichen Mulden der Rastierkontur 110 sind für eine Schaltvorrichtung vorgesehen, bei der das Bedienelement entlang einer ersten Bewegungsachse, einer bezüglich der ersten Bewegungsachse versetzt entlang der ersten Bewegungsachse verlaufenden, zweiten Bewegungsachse und einer quer zu der ersten Bewegungsachse sowie der zweiten Bewegungsachse verlaufenden, dritten Bewegungsachse bewegbar ist. Eine erste der zwei länglichen Mulden der Rastierkontur 110 ist einer Bewegung des Bedienelements entlang der ersten Bewegungsachse zugeordnet. Eine zweite der zwei länglichen Mulden der Rastierkontur 110 ist einer Bewegung des Bedienelements entlang der zweiten Bewegungsachse zugeordnet. Der Übergangsabschnitt der Rastierkontur 110 ist einer Bewegung des Bedienelements entlang der dritten Bewegungsachse zugeordnet.

Hierbei entspricht beispielsweise die erste Bewegungsachse des Bedienelements einer üblichen Automatikgetriebe-Schaltgasse mit den Schaltstellungen P, R, N und D, entspricht die zweite Bewegungsachse einer sogenannten manuellen Gasse und entspricht die dritte Bewegungsachse einer Verbindungsgasse zwischen der Automatikgetriebe-Schaltgasse und der manuellen Gasse.

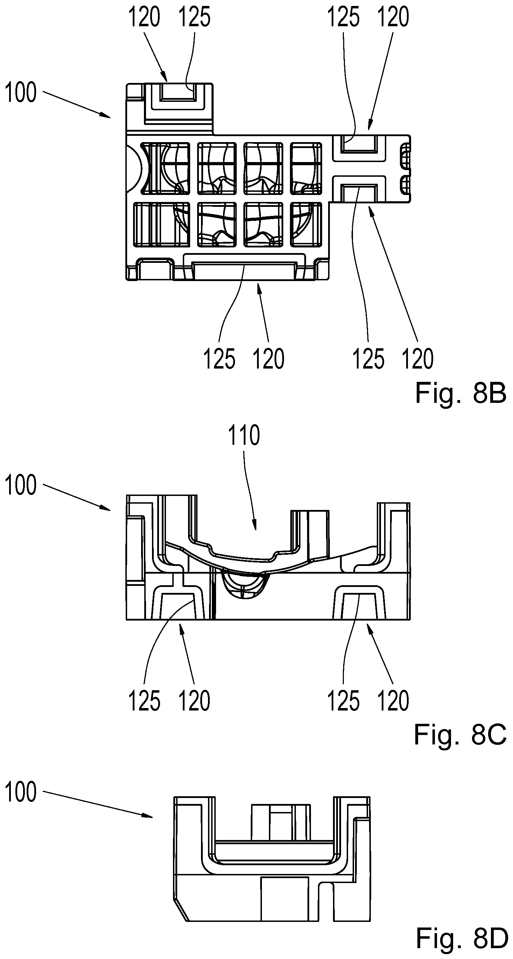

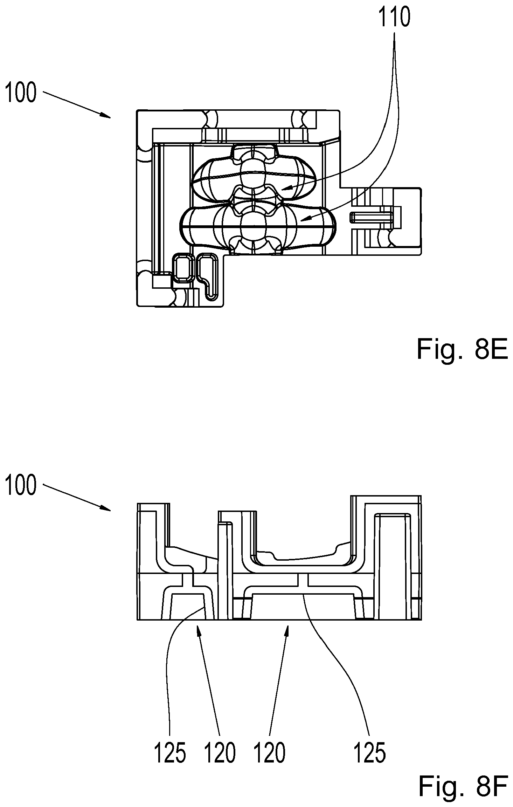

In Fig. 8A ist eine isometrische Ansicht der Vorrichtung 100 gezeigt, wobei darstellungsbedingt die Rastierkontur 110 von schräg oben und zwei der Befestigungsabschnitte 120 mit den zugeordneten Befestigungskontaktoberflächen 125 zu erkennen sind. In Fig. 8B ist eine Unteransicht der Vorrichtung 100 aus Fig. 8A gezeigt, wobei darstellungsbedingt hierbei vier der Befestigungsabschnitte 120 mit den zugeordneten Befestigungskontaktoberflächen 125 zu erkennen sind. In Fig. 8C ist eine Vorderansicht der Vorrichtung 100 aus Fig. 8A gezeigt, wobei darstellungsbedingt die Rastierkontur 110 von seitlich her und zwei der Befestigungsabschnitte 120 mit den zugeordneten Befestigungskontaktoberflächen 125 zu erkennen sind. In Fig. 8D ist eine linke Ansicht der Vorrichtung 100 aus Fig. 8A gezeigt. In Fig. 8E ist eine Draufsicht der Vorrichtung 100 aus Fig. 8A gezeigt, wobei darstellungsbedingt die Rastierkontur 110 von oben zu erkennen ist. In Fig. 8F ist eine weitere Vorderansicht der Vorrichtung 100 aus Fig. 8A gezeigt, wobei darstellungsbedingt zwei der Befestigungsabschnitte 120 mit den zugeordneten Befestigungskontaktoberflächen 125 zu erkennen sind.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Vorrichtung zum Einstellen bzw. Rastiervorrichtung
- 110: Rastierkontur
- 115: Bedienelement-Kontaktoberfläche
- 120: Befestigungsabschnitt
- 125: Befestigungskontaktoberfläche
- 130: Anschlagabschnitt bzw. Anschlagsdämpfer
- 135: Anschlagkontaktoberfläche
- 400: Schaltvorrichtung
- 410: Weichmaterialabschnitt
- 440: Bedienelement
- 445: Rastierelement
- 600: Verfahren zum Herstellen
- 610: Schritt des Ausformens einer Rastierkontur
- 620: Schritt des Ausformens einer Kontaktoberfläche
- 700: Fahrzeug
- 710: Automatikgetriebe

## Patentansprüche

1. Vorrichtung (100) zum Einstellen einer Bewegung eines Bedienelements (440) für ein Automatikgetriebe (710) eines Fahrzeugs (700), wobei die Vorrichtung (100) eine Rastierkontur (110) zum Definieren zumindest einer Schaltstellung des Bedienelements (440) entlang einem Bewegungsweg des Bedienelements (440) und eine Kontaktoberfläche (115, 125, 135) aufweist, wobei die Rastierkontur (110) zumindest teilweise aus einem Hartmaterial mit einer ersten Elastizität und die Kontaktoberfläche (115, 125, 135) aus einem Weichmaterial mit einer zweiten Elastizität ausgeformt ist, wobei die zweite Elastizität des Weichmaterials größer als die erste Elastizität des Hartmaterials ist, **dadurch gekennzeichnet, dass** die Kontaktoberfläche (115, 125, 135) eine Bedienelement-Kontaktoberfläche (115) in mindestens einem einer Schaltstellung des Bedienelements (440) zugeordneten Teilabschnitt der Rastierkontur (110) umfasst.

2. Vorrichtung (100) gemäß Anspruch 1, **dadurch gekennzeichnet, dass** die Vorrichtung einen aus dem Weichmaterial ausgeformten Weichmaterialabschnitt (410) aufweist, und die zumindest teilweise aus dem Hartmaterial ausgeformte Rastierkontur (110) den Weichmaterialabschnitt (410) überspannend ausgeformt ist.

3. Vorrichtung (100) gemäß einem der vorangegangenen Ansprüche, mit mindestens einem Befestigungsabschnitt (120) zum Befestigen der Vorrichtung (100) an einer Trägereinrichtung mittels eines Befestigungselements, **dadurch gekennzeichnet, dass** die Kontaktoberfläche (115, 125, 135) ferner eine Befestigungskontaktoberfläche (125) des mindestens einen Befestigungsabschnitts (120) umfasst.

4. Vorrichtung (100) gemäß einem der vorangegangenen Ansprüche, mit mindestens einem Anschlagabschnitt (130) zum mechanischen Begrenzen einer Bewegung des Bedienelements (440) entlang dem Bewegungsweg, **dadurch gekennzeichnet, dass** die Kontaktoberfläche (115, 125, 135) ferner eine Anschlagkontaktoberfläche (135) des mindestens einen Anschlagabschnitts (130) umfasst.

5. Vorrichtung (100) gemäß einem der vorangegangenen Ansprüche, **dadurch gekennzeichnet, dass** ein das Weichmaterial umfassender Bereich (115, 125, 135; 410) der Vorrichtung (100) zusammenhängend und/oder einstückig ausgeformt ist.

6. Schaltvorrichtung (400) zum Schalten eines Automatikgetriebes (710) eines Fahrzeugs (700), wobei die Schaltvorrichtung (400) ein Bedienelement (440) mit einem Rastierelement (445) aufweist, **dadurch gekennzeichnet, dass** die Schaltvorrichtung (400) eine Vorrichtung (100) zum Einstellen einer Bewegung des Bedienelements (440) gemäß einem der vorangegangenen Ansprüche aufweist, wobei das Rastierelement (445) des Bedienelements (440) bei der Bewegung des Bedienelements (440) entlang der Rastierkontur (110) der Vorrichtung (100) bewegbar angeordnet ist.

7. Verfahren (600) zum Herstellen einer Vorrichtung (100) zum Einstellen einer Bewegung des Bedienelements (440) für ein Automatikgetriebe (710) eines Fahrzeugs (700), wobei das Verfahren (600) folgende Schritte aufweist:
Ausformen (610) einer Rastierkontur (110) zum Definieren zumindest einer Schaltstellung des Bedienelements (440) entlang einem Bewegungsweg des Bedienelements (440) zumindest teilweise aus einem Hartmaterial mit einer ersten Elastizität; und
Ausformen (620) einer Kontaktoberfläche (115, 125, 135) der Vorrichtung (100) aus einem Weichmaterial mit einer zweiten Elastizität, die größer als die erste Elastizität ist,
**dadurch gekennzeichnet, dass** im Schritt (620) des Ausformens der Kontaktoberfläche (115, 125, 135) eine Bedienelement-Kontaktoberfläche (115) in mindestens einem einer Schaltstellung des Bedienelements (440) zugeordneten Teilabschnitt der Rastierkontur (110), eine Befestigungskontaktoberfläche (125) mindestens eines Befestigungsabschnitts (120) zum Befestigen der Vorrichtung (100) an einer Trägereinrichtung mittels eines Befestigungselements und/oder eine Anschlagkontaktoberfläche (135) mindestens eines Anschlagabschnitts (130) zum mechanischen Begrenzen einer Bewegung des Bedienelements (440) entlang dem Bewegungsweg aus dem Weichmaterial ausgeformt wird.

8. Verfahren (600) gemäß Anspruch 7, **dadurch gekennzeichnet, dass** die Schritte (610, 620) des Ausformens durch Ausführen eines Zweikomponenten-Spritzgussprozesses ausgeführt werden.

## Claims

1. Apparatus (100) for setting a movement of an operating element (440) for an automatic transmission (710) of a vehicle (700), the apparatus (100) having a latching contour (110) for defining at least one shifting position of the operating element (440) along a movement path of the operating element (440), and also having a contact surface (115, 125, 135), the latching contour (110) being formed at least partially from a hard material with a first elasticity, and the contact surface (115, 125, 135) being formed from a soft material with a second elasticity, the second elasticity of the soft material being greater than the first elasticity of the hard material, **characterized in that** the contact surface (115, 125, 135) comprises an operating element contact surface (115) in at least one part section of the latching contour (110), which part section is assigned to a shifting position of the operating element (440).

2. Apparatus (100) according to Claim 1, **characterized in that** the apparatus has a soft material section (410) which is formed from the soft material, and the latching contour (110) which is formed at least partially from the hard material is formed so as to span the soft material section (410).

3. Apparatus (100) according to either of the preceding claims, with at least one fastening section (120) for fastening the apparatus (100) to a carrier device by means of a fastening element, **characterized in that**, furthermore, the contact surface (115, 125, 135) comprises a fastening contact surface (125) of the at least one fastening section (120).

4. Apparatus (100) according to one of the preceding claims, with at least one stop section (130) for mechanically limiting a movement of the operating element (440) along the movement path, **characterized in that**, furthermore, the contact surface (115, 125, 135) comprises a stop contact surface (135) of the at least one stop section (130).

5. Apparatus (100) according to one of the preceding claims, **characterized in that** a region (115, 125, 135; 410) of the apparatus (100), which region (115, 125, 135; 410) comprises the soft material, is formed in a contiguous and/or single-piece manner.

6. Shifting apparatus (400) for shifting an automatic transmission (710) of a vehicle (700), the shifting apparatus (400) having an operating element (440) with a latching element (445), **characterized in that** the shifting apparatus (400) has an apparatus (100) for setting a movement of the operating element (440) according to one of the preceding claims, the latching element (445) of the operating element (440) being arranged such that it can be moved along the latching contour (110) of the apparatus (100) in the case of the movement of the operating element (440).

7. Method (600) for producing an apparatus (100) for setting a movement of the operating element (440) for an automatic transmission (710) of a vehicle (700), the method (600) having the following steps:
forming (610) of a latching contour (110) for defining at least one shifting position of the operating element (440) along a movement path of the operating element (440) at least partially from a hard material with a first elasticity; and
forming (620) of a contact surface (115, 125, 135) of the apparatus (100) from a soft material with a second elasticity which is greater than the first elasticity,
**characterized in that**, in step (620) of forming of the contact surface (115, 125, 135), an operating element contact surface (115) in at least one part section of the latching contour (110), which part section is assigned to a shifting position of the operating element (440), a fastening contact surface (125) of at least one fastening section (120) is formed for fastening the apparatus (100) to a carrier device by means of a fastening element, and/or a stop contact surface (135) of at least one stop section (130) for mechanically limiting a movement of the operating element (440) along the movement path are/is formed from the soft material.

8. Method (600) according to Claim 7, **characterized in that** the steps (610, 620) of forming are carried out by way of a two-component injection moulding process being carried out.

## Revendications

1. Dispositif (100) permettant de régler un déplacement d'un élément de commande (440) pour une boîte de vitesses automatique (710) d'un véhicule (700), le dispositif (100) comprenant un contour d'encliquetage (110) servant à définir au moins une position de changement de vitesses de l'élément de commande (440) le long d'une trajectoire de déplacement de l'élément de commande (440) et une surface de contact (115, 125, 135), dans lequel le contour d'encliquetage (110) est formé au moins partiellement à partir d'un matériau dur présentant une première élasticité et la surface de contact (115, 125, 135) est formée à partir d'un matériau mou présentant une deuxième élasticité, dans lequel la deuxième élasticité du matériau mou est supérieure à la première élasticité du matériau dur, **caractérisé en ce que** la surface de contact (115, 125, 135) comporte une surface de contact d'élément de commande (115) dans au moins une section partielle du contour d'encliquetage (110) associée à une position de changement de vitesses de l'élément de commande (440).

2. Dispositif (100) selon la revendication 1, **caractérisé en ce que** le dispositif comprend une section en matériau mou (410) formée à partir du matériau mou, et le contour d'encliquetage (110) formé au moins partiellement à partir du matériau dur est formé de manière à recouvrir la section en matériau mou (410).

3. Dispositif (100) selon l'une des revendications précédentes, comprenant au moins une section de fixation (120) servant à fixer le dispositif (100) à un dispositif de support au moyen d'un élément de fixation, **caractérisé en ce que** la surface de contact (115, 125, 135) comporte en outre une surface de contact de fixation (125) de l'au moins une section de fixation (120).

4. Dispositif (100) selon l'une des revendications précédentes, comprenant au moins une section de butée (130) servant à limiter mécaniquement un déplacement de l'élément de commande (440) le long de la trajectoire de déplacement, **caractérisé en ce que** la surface de contact (115, 125, 135) comporte en outre une surface de contact de butée (135) de l'au moins une section de butée (130).

5. Dispositif (100) selon l'une des revendications précédentes, **caractérisé en ce qu'**une région (115, 125, 135 ; 410) du dispositif (100) comportant le matériau mou est formée de manière continue et/ou d'une seule pièce.

6. Dispositif de changement de vitesses (400) permettant le changement de vitesses d'une boîte de vitesses automatique (710) d'un véhicule (700), le dispositif de changement de vitesses (400) comprenant un élément de commande (440) doté d'un élément d'encliquetage (445), **caractérisé en ce que** le dispositif de changement de vitesses (400) comprend un dispositif (100) permettant de régler un déplacement de l'élément de commande (440) selon l'une des revendications précédentes, l'élément d'encliquetage (445) de l'élément de commande (440) étant disposé de manière déplaçable le long du contour d'encliquetage (110) du dispositif (100) lors du déplacement de l'élément de commande (440).

7. Procédé (600) permettant de fabriquer un dispositif (100) permettant de régler un déplacement de l'élément de commande (440) pour une boîte de vitesses automatique (710) d'un véhicule (700), le procédé (600) comprenant les étapes suivantes :
formage (610) d'un contour d'encliquetage (110) servant à définir au moins une position de changement de vitesses de l'élément de commande (440) le long d'une trajectoire de déplacement de l'élément de commande (440) au moins partiellement à partir d'un matériau dur présentant une première élasticité ; et
formage (620) d'une surface de contact (115, 125, 135) du dispositif (100) à partir d'un matériau mou présentant une deuxième élasticité qui est supérieure à la première élasticité,
**caractérisé en ce qu'**à l'étape (620) de formage de la surface de contact (115, 125, 135), une surface de contact d'élément de commande (115) est formée dans au moins une section partielle du contour d'encliquetage (110) associée à une position de changement de vitesses de l'élément de commande (440), une surface de contact de fixation (125) d'au moins une section de fixation (120) servant à la fixation du dispositif (100) à un dispositif de support au moyen d'un élément de fixation est formée et/ou une surface de contact de butée (135) d'au moins une section de butée (130) servant à limiter mécaniquement un déplacement de l'élément de commande (440) le long de la trajectoire de déplacement est formée à partir du matériau mou.

8. Procédé (600) selon la revendication 7, **caractérisé en ce que** les étapes (610, 620) de formage sont effectuées par mise en œuvre d'un procédé de moulage par injection à deux composants.
